Europäisches Patentamt

European Patent Office

Office européen des brevets

(11) Publication number: **0 035 609**
A1

## EUROPEAN PATENT APPLICATION

(21) Application number: 80300616.2

(22) Date of filing: 29.02.80

(51) Int. Cl.³: **C 09 D 3/82**
C 08 J 7/04, C 09 D 7/02
C 09 D 5/10

(43) Date of publication of application:
16.09.81  Bulletin  81 37

(84) Designated Contracting States:
AT BE CH DE FR GB IT LU NL SE

(71) Applicant: SWEDLOW, INC.
12122 Western Avenue
Garden Grove California 92645(US)

(72) Inventor: Ashlock, Lysander Thomas
100 South Seranado Apartment 80
Orange California 92669(US)

(72) Inventor: Mukamal, Harold
4881 Dogwood Avenue
Seal Beach, California 90740(US)

(72) Inventor: White, William H.
12641 E. Fellowship
La Puente, California 91744(US)

(74) Representative: Machin, Peter Charles et al,
Abel & Imray Northumberland House 303-306 High
Holborn
London WC1V 7LH(GB)

(54) Transparent abrasion resistant coating composition.

(57) Transparent, abrasion resistant coating compositions comprise a colloidal dispersion of a water insoluble dispersant in a water-alcohol solution of a partial condensate of silanol wherein the dispersant comprises metals, alloys and compounds thereof.

Croydon Printing Company Ltd.

-1-

## DESCRIPTION

Technical Field

The present invention relates to coating compositions and in particular, relates to protective coating compositions for polymeric materials.

Background

In recent years, synthetic polymeric materials have been utilized in a wide variety of applications. Transparent polymeric materials have been utilized as windows in aircraft and public buildings. Further, transparent polycarbonates and acrylics have been utilized in glazing for automobiles, buses and aircraft. Although these transparent polymers may be readily fabricated into the desired shape, unfortunately they have relatively low abrasion resistance. The prior method of enabling the use of these transparent polymers involves coating the surface of the polymers with a transparent, abrasion resistent coating. Prior coating such as silica-containing solutions and polysilicic acid fluorinated copolymer have been utilized. Unfortunately, these coatings are difficult to apply, have a low humidity resistance or are expensive.

Another prior coating composition is disclosed in the Clark U.S. Patent No, 3,986,997. The Clark composition comprised a collodial dispersion of silica in a water-alcohol solution of the partial condensate of silanol.
Although the Clark composition is suitable in some applications, in other applications, additional hardness, elongation and static dissipation was desired to enable the
formation of a more suitable coating.  Thus, a coating
having an improved hardness, elongation and static
dissipating capability is still desired.

Summary of the Invention

It is therefore an object of the present invention
to provide an improved abrasion resistant coating composition.  It is a further object of the present invention
to provide a coating composition having improved elongation and static dissipating capabilities.

According to the invention there is provided a
coating composition which forms a transparent, abrasion
resistant coating upon curing, said coating composition
containing an effective abrasion resisting amount of a
colloidal dispersion of a water insoluble dispersant
in a water-alcohol solution of the partial condensate of
$R(Si(OH)_3)$ wherein R is an organic radical and said
dispersant is selected from the group consisting of metals,
alloys and metal compounds.

Also according to the invention there is provided an
article manufactured by applying a coating composition
containing an effective abrasion resisting amount of a
collodial dispersion of a water insoluble dispersant in a
water-alcohol solution of the partial condensate of
$R(Si(OH)_3)$ wherein R is an organic radical and said
dispersant is selected from the group consisting of metals,
alloys and metal compounds to at least one surface of a substrate, and curing said coating composition.

The insoluble dispersant is stable in the pH range
of about 3 to 6.  The silanol preferably has the formula
$R(Si(OH)_3)$ where R is an organic radical such as a lower
alkyl or vinyl, methoxyethyl, phenyl, $\gamma$-glycidoxy propyl
or $\gamma$-methacryloxypropyl radical.  Preferably, the partial
condensate contains at least 30% by weight methyl silanol.

## Detailed Description of the Invention.

The present invention contemplates the formation of a transparent, abrasion resistant coating comprising a colloidal dispersion of a water insoluble dispersant in a water-alcohol solution of the partial condensate of silanol.

The insoluble dispersants are prefererably a metal, metal alloy or metal compound which can be dispersed in the water alcohol solution of the partial condensate of silanol to form a colloidal dispersion. Suitable metals are antimony, aluminium, gold, silver, copper, tin cadmium, and indium. Suitable alloys are mixtures of the above metals such as tin-antimony, tin-indium and tin-cadmium alloys. Suitable metal compounds are oxides, nitrides, sulfides, hydroxides and salts such as phosphates and acetates of the above metals and alloys, including antimony oxide, aluminium, oxide, aluminium acetate, tin-antimony oxides, cadmium stannate and indium-tin oxide. However, it will be obvious to one skilled in the art that other water insoluble metals, metal alloys and metal compounds which can be dispersed in a water-alcohol solution of the partial condensate of silanol to form a colloidal dispersion, are stable in the pH range of about 3 to about 6, and do not alter the silicone cure reaction or coating stability would also be suitable in the practice of the present invention.

In some cases, the dispersants of the present invention may be opaque. Suitable opaque dispersants preferably have a particule size small enough to avoid appreciable scattering of visible light thereby preventing the formation of a translucent or pigmented coating. Preferably, if the dispersant has a refractive index of about 1.5, the average colloidal particle size should be about 2.0 or greater, the average colloidal particle size should be about 100 angstroms or less.

The colloidal dispersants function to improve the hardness and the elongation properties of the coating. Further, certain colloidal metals, metal alloys and metal compounds such as copper, gold, silver, tin-antimony oxides, cadmium stannate and indium tin oxide also provide improved static dissipating properties.

The partial compensate preferably comprises trisilanols having the formula $R(Si(OH)_3)$ wherein R is a low molecular weight, short chain organic radical and is preferably selected from the group of radicals consisting of lower alkyl or vinyl $(C_1 - C_4)$, methoxyethyl, phenyl, $\gamma$ - glycidoxy propyl or $\gamma$ - methacryloxypropyl. The organic radical functions to enable the formation of the polymeric coating. However, larger organic radicals hinder the cross-linking of the silanol and result in a softer coating. The partial condensate is preferably comprised of at least about 30% by weight methyl trisilanol and most preferably 100% by weight methyl trisilanol.

The partial condensate may also comprise mixtures of trisilanols and disilanols. The partial condensate comprising a mixture of tri and disilanols forms coatings having increased flexibility and decreased hardness. Therefore, it is preferred that the mixture comprise at least about 80% by weight of the trisilanol to form a coating having a suitable hardness.

The silanols are preferably generated in situ by the hydrolysis of the corresponding alkoxysilane in an aqueous dispersion of the insoluble dispersant. Suitable alkoxysilanes have alkoxy substituents such as methoxy, ethoxy, isopropoxy, methoxyethoxy t-butoxy and acetoxy which, upon the hydrolysis of the silane, form the corresponding alcohol or acid. Upon the formation of the silanol in the acidic aqueous medium, a portion of the silicon-bonded hydroxyl groups of the silanol are condensed to form silicon--oxygen-silicon bonds. However, the silanol is only partially condensed and retains a portion of the silicon-bonded hydroxyl groups to render the polymer soluble in the water-alcohol solvent. The partial condensate can be characterized as having at least one silicone-bonded hydroxyl group for every three silicon-oxygen-silicon bonds. When the coating is cured, the remaining hydroxyl groups condense to form a selsesquioxane, $RSiO_{3/2}$.

The coating composition of the present invention is preferably prepared by dispersing the dispersant in an aqueous or aqueous-alcohol solution to form a hydrosol. Suitable alcohols are lower aliphatic alcohols such as methanol, ethanol, propanol and isopropanol. However, it will be obvious to one skilled in the art that other alcohols may also be utilized in the practice of the present invention. The hydrosol is then added to a solution of the alkoxysilane in acid. The solution of alkoxysilane contains a sufficient amount of acid so that the resulting mixture preferably has a pH from about 3 to about 6. At lower or higher pH, the dispersant tends to precipitate out from solution. The acid is preferably an organic acid such as acetic, chloroacetic, formic, and dimethylmalonic because they evaporate readily when the coating is dried and they enhance adhesion of the coating to the substrate. Other suitable organic and inorganic acids are disclosed in the Clark U.S. patent, supra, the disclosure of which is incorporated herein by reference.

In a short time after the hydrosol and alkoxysilane solution are mixed together, substantially all of the alkoxysilane is hydrolyzed to form the corresponding silanol and alcohol. A portion of the silanol is then condensed to form the partial condensate. It is preferred that the mixture contain enough alcohol to form a water-alcohol co-solvent system having from about 20% to about 75% by weight alcohol to insure the solubility of the partial condensate. Additional alcohol or another polar solvent such as acetone may be added to the mixture to form a suitable solvent system.

Preferably, the coating composition contains from about 10% to about 50% solids and the solids consist of about 10% to about 70% of the colloidal dispersant, and about 30% to about 90% of the partial condensate. However, it will be appreciated by those skilled in the art that the amount of solids in the coating and the composition of the solids may vary over a wide range depending upon the desired properties of the coating.

Preferably a latent condensation catalyst is added to the coating composition to enable curing of the coating composition under milder conditions to form the hard, obrasion resistant coating. Preferably a sufficient amount of the catalyst is added to the composition to comprise about 0.1% to about 1% by weight of the composition. Suitable condensation catalysts for the present invention are choline acetate and sodium acetate. Other suitable condensation catalysts are disclosed in the Clark patent.

The coating composition of the present invention has stable shelf life of about six months to one year. The composition can be readily applied to a variety of substrates such as glass, polycarbonates, acrylics, etc. by methods well known to the art skilled such as flow, spray or dip coating. Then the coating composition is cured at temperatures of about 65 to about 130°C depending on the stability of the substrate for a period of time from about 1 to about 24 hours depending on the temperature to complete the condensation reaction and form the transparent abrasion resistant coating of the present invention. The coating preferably has a thickness of about 1 to about 20 microns.

The following Examples illustrate the present invention. The physical properties of the coating compositions of the present invention were compared to the physical properties of a coating formed according to the teachings of the Clark patent.

A typical blank composition for the tests was prepared as follows

Glacial acetic acid (8.0g) was added to 214 grams of methytrimethoxy silane and thoroughly mixed. The acidified silane was added to 309 grams of a stirred aqueous dispersion of colloidal silica having an initial pH of 3.4 and containing 34 percent $SiO_2$. The mixture was stirred vigorously at about 5°C to 10°C for two hours and then diluted to 940 grams by adding 404 grams of isopropanol to which 5.25 grams of benzyl trimethylammonium acetate catalyst has been added. The mixture was then filtered and coated onto an acrylic sheet substrate by flow application. The coating was then dried to a tack free condition at about 30 percent humidity and 20°C followed by curing at about 85°C for about four hours.

The compositions of the present invention were formed as follows:

Composition I:

An antimony oxide colloidal dispersion in methyl silanol was made by reacting 18.0 grams of the oxide with a mixture of 18.0 grams of trimethoxy methyl silane and 1.3 grams of glacial acetic acid. The temperature was maintained from about 0°C to 10°C. 31.6 grams of 2-propanol.

was then added to the solution. The mixture was allowed to digest for a period of about 48 hours and then 16.9 grams of 2-propanol, 12.6 grams of butanol and 0.9 grams of a 10% choline acetate solution in 2-propanol was added to the mixture. The mixture was then filtered and coated onto the acrylic substrate by flow film application. The coating was then dried to a tack-free condition at about 40% humidity at about 20°C and cured at about 85°C to 95°C for about two hours.

Composition II:

A dispersion comprising 208 grams of basic aluminum acetate in 312 grams distilled water was added to 200 grams of isopropyl alcohol with constant stirring at a temperature of about 5°C to 10°C. Then, 250 grams of methyl trimethoxy silane was added slowly with stirring to the mixture while maintaining the reaction temperature. After one hour of stirring, 142 grams of isopropyl alcohol and 0.9 grams of a 10% choline acetate solution in 2-propanol was added to the mixture and the mixture was stirred for another hour. The product was filtered through a 1.2 micron filter using diatomaceous earth as a filtering aid. The composition was coated on acrylic as 26% solid by flow film application. The coating was then dried to a tack free condition at about 40% humidity at about 20°C and cured for four hours at 87°C.

The coated parts were tested for light transmission and haze using ASTM C-1003; taber abrasion using ASTM D-1044 (500 gms, 100 rev.), and adhesion and Elongation - Flexibility as follows:

Adhesion:

Cross-hatch scribes are made on the surface of samples of the coated parts and 3M-600 cellophane tape is then affixed to the surface. The tape is then pulled away from the surface to remove the coating. The number of unaffected squares determines the percentage of adhesion of the coating to the substrate.

<u>Elongation-Flexibility</u>:

Samples of the coated material having dimensions of one inch by ten inches are wrapped around mandrels having decreasing diameters from 84 inches to 8 inches. Each sample is then inspected with high intensity lamps to determine coating failure as evidenced by perpendicular cracking across the coating.

The Percent Elongation is then calculated as follows:

$$E = \frac{100 \times \frac{T}{2}}{R}$$

T = thickness of sample
R = radius of mandrel at which coating failed.

The results of the test are as follows:

|  | Clark Coating | Composition I | Composition II |
|---|---|---|---|
| Light Transmission, % | 93.9 | 92.0 | 93.2 |
| Haze, % | 0.2 | 0.08 | 0.25 |
| Taber Abrasion, % delta haze | 2.5 | 0.7 | 1.0 |
| Flexed Elongation | 1.0 | 1.5 | 1.0 |
| Adhesion % | 100 | 100 | 100 |

From the above data, it can be seen that the coating composition of the present invention exhibits improved taber abrasion resistance and elongation. Further, the coating exhibits suitable adhesion to the substrates.

While embodiments and applications of this invention have been shown and described, it will be apparent to those skilled in the art that many more modifications are possible without departing from the inventive concepts herein described. The invention, therefore, is not to be restricted except as is necessary by the prior art and by the spirit of the appended claims.

CLAIMS:

1. A coating composition which forms a transparent, abrasion resistant coating upon curing, said coating composition containing an effective abrasion resisting amount of a colloidal dispersion of a water insoluble dispersant in a water-alcohol solution of the partial condensate of $R(Si)(OH)_3$) wherein R is an organic radical and said dispersant is selected from the group consisting of metals, alloys and metal compounds.

2. The composition of Claim 1 wherein said metals are selected from the group consisting of antimony, aluminum, gold, silver, copper, tin, cadmium, and indium.

3. The composition of Claim 2 wherein said alloys are mixtures of said metals.

4. The composition of Claim 1 wherein said metal compounds are oxides, nitrides, phosphates, sulfides, hydroxides and acetates cf said metals and alloys.

5. The composition of Claim 1 where said dispersant is aluminum acetate.

6. The composition of Claim 1 wherein said dispersant is antimony oxide.

7. The composition of Claim 1 wherein said dispersant is aluminum oxide.

8. The composition of Claim 1 wherein said dispersant has a refractive index of about 1.5 and a particle size smaller than about 200 angstroms.

9. The composition of Claim 1 where said dispersant has a refractive index greater than about 2 and a particle size smaller than 100 angstroms.

10. The composition of Claim 1 wherein said organic radical is selected from the group consisting of $C_1 - C_4$ alkyl and vinyl, methoxyethyl, $\gamma$ - glycidoxy propyl and $\gamma$ - methacryloxypropyl.

11. The composition of Claim 10 wherein said partial condensate contains at least 30% by weight methyl trisilanol.

12. The composition of Claim 11 wherein said partial condensate contains 100% by weight methyl trisilanol.

13. The composition of Claim 1 wherein said composition contains sufficient acid to provide a pH in the range of about 3 to about 6.

14. The composition of Claim 13 wherein said acid is an organic acid selected from the group comprising acetic acid, chloroacetic, formic and dimethylmalonic.

15. The composition of Claim 1 wherein said composition contains from about 10% to about 50% solids.

16. The composition of Claim 15 wherein said solids consist of about 10% to about 70% of said colloidal dispersant.

17. The composition of Claim 15 wherein said solids consist of about 30% to about 90% of the partial condensate.

18. The composition of Claim 1 wherein said composition is further provided with a latent condensation catalyst.

19. The composition of Claim 18 wherein said catalyst is choline acetate.

20. The composition of Claim 1 wherein said alcohol in said water-alcohol solution is a lower aliphatic alcohol.

0035609

21. The composition of Claim 1 wherein said alcohol in said water-alcohol solution comprises about 20 to about 75 weight percent of said solution.

22. The composition of Claim 1 wherein said dispersant has a particle size less than about 200 angstroms, and said partial condensate containing at least 30% by weight $CH_3Si(OH)_3$ and said composition containing sufficient organic acid to provide a pH in the range of about 3 to about 6.

23. The composition of Claim 1 wherein said dispersant comprises a mixture of $R(Si(OH)_3)$ and $R_2(Si(OH)_2)$ wherein R is an organic radical, said condensate containing at least about 80% by weight $R(Si(OH)_3)$.

24. The composition of Claim 23 wherein said metals are selected from the group consisting of antimony, aluminum, gold, silver, copper, tin, cadmium, and indium.

25. The composition of Claim 24 wherein said alloys are mixtures of said metals.

26. The composition of Claim 23 wherein said metal compounds are oxides, nitrides, phosphates, sulfides, hydroxides and acetates of said metals and alloys.

27. A coating composition which forms a transparent, abrasion resistant coating upon curing, said coating composition consisting essentially of an effective abrasion resisting amount of a colloidal dispersion of a water insoluble dispersant selected from the group consisting of metals, alloys and metal compounds in a water-alcohol solution of the partial condensate of $R(Si(OH)_3)$ wherein R is an organic radical.

28. An article manufactured by applying a coating composition containing an effective abrasion resisting amount of a colloidal dispersion of a water insoluble dispersant in a water-alcohol solution of the partial condensate of $R(Si(OH)_3)$ wherein R is an organic radical and said dispersant is selected from the group consisting of metals, alloys and metal compounds, to at least one surface of a substrate, and curing said coating composition.

29. An article as in Claim 28 wherein the cured coating composition forms a coating matrix of $RSiO_{3/2}$ and the colloidal dispersant.

30. An article as in Claim 28 wherein the coating matrix consists of about 10% to about 70% of the colloidal dispersant.

31. An article as in Claim 28 wherein the dispersant is aluminum acetate.

32. An article as in Claim 28 wherein the dispersant is antimony oxide.

33. An article as in Claim 28 wherein the dispersant is aluminum oxide.

34. An article as in Claim 28 wherein the substrate is a polymethylmethacrylate plastic sheet.

**European Patent Office**

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| | <u>FR - A - 2 383 220</u> (TORAY)<br> * Claims 1-31; page 1, lines 1-5; page 2, lines 1-4, 8-13; page 4, lines 31-39; page 5, lines 10-20 * | 1,2,10 |
| | -- | |
| | <u>JP - A - 53 2539</u> (DAICEL)<br> * Abstract * | 1 |
| | -- | |
| | <u>FR - A - 2 322 909</u> (KANSAI PAINT)<br> * Claims 1,6-8; page 2, lines 24-31 * | 1 |
| | -- | |
| | <u>FR - A - 2 276 363</u> (DOW CORNING)<br> * Claims 1-10; page 6, lines 31, 38,39; page 7, lines 5-11 * | 1 |
| | -- | |
| A | <u>US - A - 4 177 315</u> (R.W. UBERSAX)<br> * Claims 1-4 * | 1 |
| | -- | |
| A | <u>US - A - 4 084 021</u> (T.C. SANDVIG)<br> * Claims 1,2 * | 1 |
| | -- | |
| A | CHEMICAL ABSTRACTS, vol. 88, no. 24, 24th June 1978, page 108, no. 172029z<br>Columbus, Ohio, U.S.A.<br>& JP - A - 77 154 837 (DAICEL LTD.) 22-12-1977<br> * Abstract * ---- | |

**CLASSIFICATION OF THE APPLICATION (Int. Cl.³)**

C 09 D 3/82
C 08 J 7/04
C 09 D 7/02
      5/10

**TECHNICAL FIELDS SEARCHED (Int. Cl.³)**

C 09 D  3/82
C 08 J  7/04
C 09 D  5/10
      7/02
C 08 L 83/04
      83/06

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 10-11-1980 | DEPIJPER |

EPO Form 1503.1  06.78